# EUROPÄISCHE PATENTSCHRIFT

(11) **EP 1 217 349 B1**
(45) Veröffentlichungstag und Bekanntmachung des Hinweises auf die Patenterteilung: **02.09.2009**
(21) Anmeldenummer: 01125023.0
(22) Anmeldetag: 20.10.2001
(51) Int. Cl.: G01K 17/02, G01K 17/06, G09F 3/03

(54) **Heizkostenverteiler**
Heating cost distributor
Distributeur de frais de chauffage

(30) Priorität: 20.12.2000 DE 10063711
(43) Veröffentlichungstag der Anmeldung: 26.06.2002
(73) Patentinhaber: Techem Energy Services GmbH, 65760 Eschborn (DE)
(72) Erfinder: Glaser, Friedrich, Dipl.-Ing., 63517 Rodenbach (DE)
(74) Vertreter: KEIL & SCHAAFHAUSEN Patentanwälte

(56) Entgegenhaltungen:
- EP-A- 0 977 024
- DE-C- 3 690 114

## Beschreibung

Die Erfindung betrifft einen Heizkostenverteiler, insbesondere zur Wärmeverbrauchserfassung von Heizkörpern, mit wenigstens zwei Gehäuseteilen, welche mittels einer Plombe aneinander befestigbar sind, und deren Befestigung aneinander durch Zerstörung der Plombe gelöst werden kann, wobei die Plombe einen Plombenkopf und einen Schaft mit wenigstens einem Rastmittel zum Befestigen aufweist.

Ein derartiger Heizkostenverteiler ist beispielsweise aus der DE 36 90 114 C1 bekannt und umfasst zwei Gehäuseteile, welche mittels einer Plombe aneinander befestigbar sind. Die Plombe verfügt über einen Plombenkopf und einen Schaft mit Rastmitteln zum Befestigen der Plombe. Der Schaft ist mit einer Hauptsollbruchstelle versehen, und der benutzerseitig völlig eben ausgebildete Plombenkopf besitzt mehrere zusätzliche Sollbruchstellen. Ein Teilbereich des Plombenkopfes verschließt zusammen mit einer Sollbruchstelle eine Angriffsstelle für ein Werkzeug zum Lösen der Plombe. Diese Sollbruchstelle dient als Indikator, ob bei einer Plombe bereits ein widerrechtlicher Werkzeugeinsatz erfolgt ist, indem ein Werkzeug in die Angriffsstelle eingesetzt wurde. Der Plombenkopf verfügt ferner über eine Sollbruchstelle, welche abschert, wenn beispielsweise dadurch Zugbeanspruchung auf die Plombe ausgeübt wird, dass die beiden Gehäuseteile auseinandergezogen werden. Durch die geschilderten Maßnahmen wird bestimmten Manipulationstatbeständen ein bestimmter Indikator (Sollbruchstelle) zugeordnet.

Die bekannte Plombe ist im Gebrauch nachteilig. Dies liegt einerseits darin begründet, dass selbst für einen autorisierten Wartungsfachmann das Auffinden einer verschlossenen Angriffsstelle an dem völlig glatten Plombenkopf erschwert ist. Es sind schließlich Mittel denkbar, mit denen die Plombe verdreht werden kann, ohne dass notwendigerweise Zug auf den Plombenkopf ausgeübt wird, und wobei auch nicht an der Angriffsstelle angesetzt wird. Bei dieser Sachlage würde folglich keine einzige der Sollbruchstellen eingreifen.

Schließlich sind Manipulationsversuche bekannt geworden, wonach ein im Bereich einer Hauptsollbruchstelle abgedrehter Plombenkopf wieder an seinen Plombenschaft angeklebt wurde. Dieser Tatbestand ist im Zusammenhang mit bekannten Heizkostenverteilern von einem autorisierten Wartungsfachmann schwer erkennbar.

Es ist eine Aufgabe der vorliegenden Erfindung, einen Heizkostenverteiler mit einer Plombe anzugeben, welcher die Nachteile des Standes der Technik vermeidet, und nicht nur eine verbesserte Sicherheit gegenüber Manipulationsversuchen aufweist, sondern auch kostengünstig herstellbar ist.

Diese Aufgabe wird erfindungsgemäß durch die Merkmale des Anspruchs 1 gelöst. Erfindungsgemäß erfolgt nicht nur eine Trennung des Plombenkopfes von seinem Schaft, sondern die Zerstörung des Plombenkopfes, bspw. mittels Zerlegung in wenigstens zwei Teilsegmente. Das unbemerkte Ankleben eines illegal abgetrennten Plombenkopfes an den zugehörigen Schaft wird dadurch zuverlässig ausgeschlossen.

Vorteilhafte Ausgestaltungen der Erfindung ergeben sich aus den Unteransprüchen.

In besonders vorteilhafter Weise verfügt die Nut zwischen dem Plombenkopf und dem Schaft über einen Nutgrund, wobei die Sollbruchstelle entlang des Nutgrundes verläuft. Mit anderen Worten bildet der Nutgrund gleichzeitig eine wesentliche Materialschwächung für die Sollbruchstelle, was besonders einfach und kostengünstig darstellbar ist.

Eine vereinfachte Werkzeuggestaltung wird gemäß vorteilhaften Varianten dadurch ermöglicht, dass die Dicke der Rückwand im Bereich des Nutgrundes gleichzeitig die Dicke der Sollbruchstelle definiert, oder dass der Plombenkopf symmetrisch zu einer Achse ausgebildet ist. Auch wenn die Rückwand scheibenförmig ist, reduziert dies den werkzeugseitigen Aufwand signifikant.

Gemäß einer weiterhin vorteilhaften Ausgestaltung der Erfindung weisen die Nuten offene Enden auf. Dies bewirkt eine definierte Zerstörung des Plombenkopf, ohne dass Teile oder Segmente aneinander hängen bleiben.

Eine rechtwinklige Anordnung der Nuten nach einer anderen vorteilhaften Variante erlaubt zum Lösen sowohl den Einsatz von gewöhnlichen Schlitzschraubendrehern als auch den Einsatz von Kreuzschlitzschraubendrehern.

Wenn der Plombenkopf mehrere Segmente aufweist, ist dessen Zerstörung einfach und in beliebiger Weise vorherbestimmbar. Dies gilt insbesondere für die Anzahl der Segmente, in die der Plombenkopf beim Lösen zerlegt wird.

Nach einer bevorzugten Variante ist der Durchmesser der Segmente größer als der Durchmesser der Rückwand so dass jeder Nutgrund radial vor dem Außendurchmesser der Segmente endet. Diese Ausgestaltung verbessert das Bruchverhalten.

Vorzugsweise werden die Nuten von den Segmenten flankiert und es ist eine gerade Anzahl von Segmenten vorgesehen. Weiterhin vorzugsweise ist jedes der Segmente kreissektorförmig. Dies erlaubt eine kostengünstige, symmetrische Gestalt des Plombenkopfes.

Für eine vereinfachte Gestaltung der Sollbruchstelle kann jedes Segment eine Dicke aufweisen, welche einem Mehrfachen der Dicke der Rückwand entspricht. Eine zusätzliche Vereinfachung kann damit einher gehen, dass jede Nut mit einer Breite versehen wird, welche im wesentlichen mit deren Tiefe übereinstimmt.

Eine besonders bevorzugte Variante der Erfindung verfügt über ein Getriebemittel zum Umsetzen einer relativen Antriebsdrehbewegung zwischen Plombe und Gehäuse in eine relative Abtriebsaxialverschiebung zwischen Plombe und Gehäuse. Durch diese Maßnahme wird selbst bei geringfügigen Verdrehwinkeln im Rahmen von Manipulationshandlungen ein Bruch der Plombe bewirkt.

Nach einer weiterhin vorteilhaften Variante umfasst das Getriebemittel plombenseitig eine rampenförmige Flanke und gehäuseseitig eine zugeordnete schräge Anlagefläche. Durch diese Maßnahme werden im Rahmen des Lösevorgangs neben Torsionsspannungen noch zusätzlich Zugspannungen in die Plombe eingebracht.

Bei einer kostengünstigen Ausführungsform ist ein Vorsprung mit der Flanke an einer Rückseite der Rückwand vorgesehen, und ist ferner in eine Ausnehmung des Gehäuses derart einführbar sowie relativ verdrehbar, dass die Flanke auf der Anlagefläche abgleitet. Die Neigung der Abgleitfläche und der Flanke ist dabei für die Progression der erzeugten Zugspannungen verantwortlich.

Um eine drehrichtungsunabhängige Funktion zu gewährleisten ist es vorteilhaft, wenn jeder Vorsprung mit zwei Flanken versehen ist, und wenn jede Ausnehmung zwei Anlageflächen aufweist.

Wenn die Vorsprünge in einer Axialrichtung mit Nocken zur Verdrehsicherung der Plombe fluchten, reduziert dies den gehäuseseitigen Aufwand und erlaubt sogar den Einsatz einer erfindungsgemäßen Plombe bei einer herkömmlichen Gehäusebauform.

Nach einer anderen vorteilhaften Abwandlung ist jedem Segment ein Vorsprung zugeordnet, so dass die Kräfte homogen in den Plombenkopf einleitbar sind. In weiterhin vorteilhafter Ausgestaltung ist jeder Vorsprung in Umfangsrichtung zu den Nuten versetzt angeordnet ist, und der Versatz schließt einen Winkel α von 45° ein.

Um die Werkstoffkosten für die Plombe bei einfacher Herstellbarkeit gering zu halten, wird vorzugsweise preisgünstiger Kunststoff herangezogen.

Die Erfindung erstreckt sich auch auf eine Plombe mit einem oder mehreren der oben beschriebenen Merkmale.

Weitere, besonders vorteilhafte Ausgestaltungen der Erfindung ergeben sich aus der nachfolgenden Beschreibung von Ausführungsbeispielen und der Zeichnung.

In der Zeichnung zeigt in jeweils stark vergrößertem Maßstab:
- Fig. 1: Abschnitte von Gehäuseteilen eines mittels einer Plombe verschlossenen Heizkostenverteilers im Schnitt;
- Fig. 2: eine vereinzelte Plombe gemäß Fig. 1 im Schnitt;
- Fig. 3: eine Ansicht in Richtung des Pfeils III in Fig. 2;
- Fig. 4: eine andere Ausführungsform im Schnitt wie in Fig. 2 mit um 45° in die Zeichenebene verschwenkt gezeichneten Vorsprüngen;
- Fig. 5: eine Detailansicht in Richtung des Pfeils V in Fig. 4,
- Fig. 6: eine Teilansicht in Richtung des Pfeils VI in Fig. 4,
- Fig. 7: eine Ansicht entsprechend Fig. 6 auf eine weitere Ausführungsform der Erfindung.

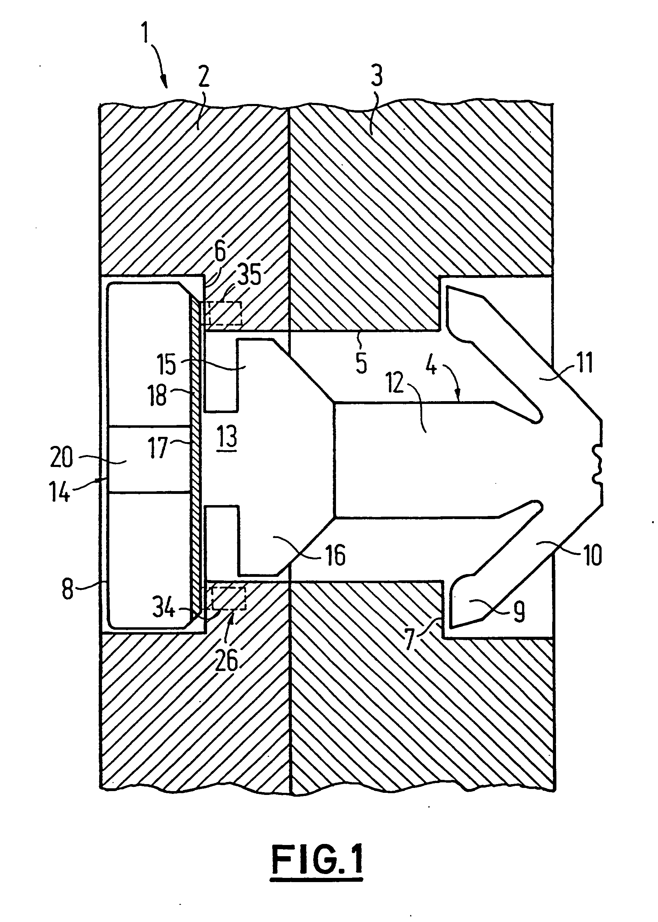

Ein Heizkostenverteiler 1, wie er nur zu einem kleinen Teil in der Fig. 1 dargestellt ist, dient insbesondere zur Wärmeverbrauchserfassung von Heizkörpern und verfügt über ein Gehäuse aus zwei Gehäuseteilen 2, 3, welche mittels einer Plombe 4 lösbar aneinander befestigbar sind. Im Inneren des Gehäuses befindet sich zum Zweck der Wärmeverbrauchserfassung eine ablesbare sowie austauschbare Messeinrichtung. Das Öffnen des Gehäuses erfolgt generell unter Zerstörung der Plombe 4. Die Zusammenhänge hinsichtlich des allgemeinen Aufbaus und der grundsätzlichen Funktionsweise eines insoweit üblichen Heizkostenverteilers sind dem Fachmann gut bekannt, so dass eine weitergehende Beschreibung nicht erforderlich ist.

Gemäß Fig. 1 verfügen die beiden Gehäuseteile 2, 3 zur Befestigung aneinander über eine Durchgangsöffnung 5, welche einen mittigen Öffnungsabschnitt aufweist, der sich durch die beiden Gehäuseteile 2, 3 erstreckt und welcher seitlich im Bereich von freien Enden der Plombe 4 in jeweils eine Bohrungsstufe 6, 7 mit größerem Durchmesser übergeht. Während die Bohrungsstufe 6 bspw. zylindrisch ausgebildet ist, und der Aufnahme eines weitgehend zylindrischen Plombenkopfes 8 dient, ist die zweite Bohrungsstufe 7 von Rastmitteln 9 hintergreifbar. Alle Ausführungsformen nach den Figuren verfügen über zwei jeweils schräg im Winkel sowie symmetrisch zu einer Achse a von einem Schaft 12 abstehende Rastarme 10, 11, welche beim Hindurchstecken der Plombe 4 durch die Durchgangsöffnung 5 elastisch in Richtung auf den Schaft 12 auslenkbar sind. In dem vollständig hindurchgesteckten Zustand (gemäss Figur 1) federt jeder Arm 10, 11 in seine Normalposition zurück, wobei jedes Rastmittel 9 hinter die Bohrungsstufe 7 schnappt. Auf diese Weise erfolgt eine formschlüssige Sicherung der Plombe 4 in der Durchgangsöffnung 5, weil einerseits der Plombenkopf 8 und andererseits jeder Rastarm 10, 11 einer axialen Verschiebung der Plombe 4 im Wege steht. Gleichzeitig erfolgt die Fixierung der beiden Gehäuseteile 2, 3 aneinander, weil diese zwischen dem Plombenkopf 8 und den Armen 10, 11 eingespannt sind.

In einem Übergangsbereich zwischen dem Schaft 12 und dem Plombenkopf 8 ist ein querschnittsverringerter Schaftbereich als Sollbruchstelle 13 vorgesehen. Das Lösen der beiden Gehäuseteile 2, 3 voneinander, unter Zerstörung der Plombe 4, wird nachstehend beschrieben.

Ein Lösewerkzeug, bspw. ein Schraubendreher, wird mit seiner Spitze in eine offene Ausnehmung 14 der Angriffsmittel eingesetzt und verdreht. Dadurch wird die gesamte Plombe 4 verdreht, bis Nocken 15, 16, welche radial von dem Schaft 12 wegragen, an jeweils zugeordneten und nicht im Detail gezeigten gehäuseseitigen Anschlägen angreifen. Gemäß der bevorzugten Ausführungsform weist die Durchgangsöffnung 5 einen schlitzförmigen Querschnitt auf, und der Plombenschaft ist flach ausgeführt, so dass die Nocken 15, 16 an Seitenflächen des Öffnungsschlitz anlegbar sind. Mit anderen Worten kann durch diese Bauweise auf separate Anschläge verzichtet werden, weil die Seitenflächen der schlitzförmigen Durchgangsöffnung 5 gleichzeitig als Anschlag für die Nocken 15, 16 des Schafts 12 dienen. Die Nocken 15, 16 verhindern folglich eine Verdrehung der Plombe 4, so dass der Plombenkopf 8 unter einem werkzeugseitig eingeleiteten Drehmoment von seinem Schaft 12 abgetrennt wird. Diese Abtrennung erfolgt - sowohl bei einem legalen Lösevorgang, als auch bei jedem Manipulationsvorgang - unter Zerstörung des Plombenkopfes 8, was nachstehend näher erläutert wird. Es ist noch hinzuzufügen, dass die Nocken 15, 16 gemäß der bevorzugten Ausführungsform derart pfeilförmig abgeschrägt sind, dass sich die Plombe 4 mit geringem Kraftaufwand in die Durchgangsöffnung einschieben lässt.

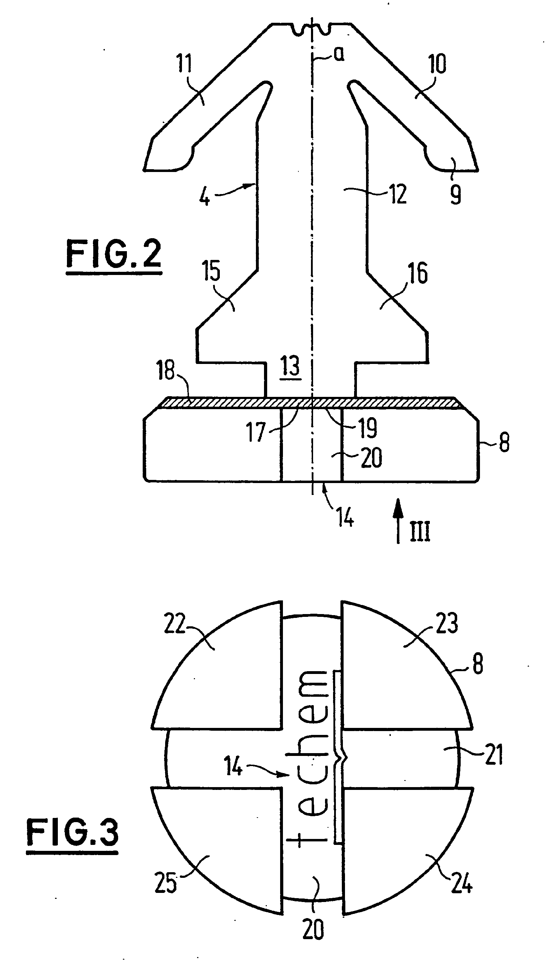

Mit der Fig. 1 übereinstimmende Merkmale sind in den Figuren 2 und 3 mit übereinstimmenden Bezugsziffern gekennzeichnet. Für die Zerlegung des Plombenkopf 8 in mehrere Teile ist das Angriffsmittel offen und gleichzeitig als Sollbruchstelle 17 vorgesehen. Mit anderen Worten erfolgt bei jeglicher Kraftausübung auf die Plombe 4, insbesondere mittels eines an dem Angriffsmittel angesetzten Werkzeugs, eine Zerstörung des Plombenkopfes 8, indem dieser unter der eingeleiteten Kraftwirkung in mehrere Teilsegmente zerspringt. Dabei erfolgt sowohl eine Trennung der Segmente voneinander, als auch deren Trennung von dem Schaft 12. Diese Zerstörung des Plombenkopf 8 unter Zusammenwirken der Sollbruchstellen 13 und 17 steht jeglichem Manipulationsversuch im Wege. Bei besonderer Auslegung der Sollbruchstelle 17 (erweiterte Nutbreite und Nuttiefe, dünnwandige Rückwand 18) kann ganz grundsätzlich auf die schaftseitige Sollbruchstelle 13 verzichtet werden. Die geschilderten Merkmale ermöglichen es schließlich dem autorisierten Techniker, für das Lösen der Plombe 4 ein beliebiges, griffbereites Werkzeug heranzuziehen, weil der Plombenkopf 8 unter jeglicher Krafteinwirkung in mehrere Segmente zerspringt. Es muss mit anderen Worten nicht notwendigerweise eine bestimmte Schraubendrehergröße, eine bestimmte Schraubendreherform oder ein Spezialwerkzeug eingesetzt werden.

Zur Bildung der Sollbruchstelle 17 verfügt der Plombenkopf 8 gemäß der bevorzugten Ausführungsform über eine dünnwandige sowie scheibenförmige Rückwand 18, mit der der Plombenkopf 8 unmittelbar an den Schaft 12 angebunden ist. Eine symmetrische Gestaltung des Plombenkopf 8 bezüglich einer Achse a ermöglicht einen einfachen Werkzeugaufbau für die Herstellung der Plombe 4. Eine benutzerseitige Oberseite der Rückwand 18 bildet einen Nutgrund 19 für Nuten 20, 21, welche sich geradlinig sowie kanalartig über die benutzerseitige Vorderseite des Plombenkopf 8 erstrecken. Beide Nuten 20, 21 sind rechwinklig zueinander angeordnet, und kreuzen sich in der Mitte des Plombenkopf 8. Ihr Nutgrund 19 erstreckt sich längs der dünnwandigen Rückwand 18. Wie die Figuren ferner zeigen, entspricht die Tiefe jeder Nut 20, 21 im wesentlichen ihrer Breite. Dies ermöglicht eine Zerstörung des Plombenkopf 8 und dessen Zerlegung in mehrere Einzelteile jeweils entlang der Sollbruchstelle 17 im Bereich des Nutgrundes 19. Wie insbesondere der Figur 2 zu entnehmen ist, sind die Nuten 20, 21 nach radial außen offen und jenseits der Nuten 20, 21 sind insgesamt vier Segmente 22, 23, 24, 25 vorgesehen, welche jede Nut 20, 21 flankieren. Das Lösen der Plombe 4 führt somit zu einer Zerlegung des Plombenkopfes 8 in eine gerade Anzahl von Segmenten 22, 23, 24, 25. Bei der beschriebenen Ausführungsform sind dies vier Einzelteile. Wie der Figur 3 entnommen werden kann, verfügt jedes Segment 22, 23, 24, 25 über eine kreissektorförmige Gestalt und der Durchmesser des Plombenkopf 8 im Bereich der Segmente 22, 23, 24, 25 ist größer als der Durchmesser der Rückwand 18. Dadurch endet jeder Nutgrund in radialer Richtung (Fig. 3) vor dem Außendurchmesser der Sektoren, was den Bruchvorgang verbessert.

In Übereinstimmung mit Fig. 1 empfiehlt es sich, die Gesamtdicke des Plombenkopf 8 im Bereich der Segmente 21 bis 24 so auszubilden, dass der Plombenkopf 8 vollständig innerhalb der Bohrungsstufe 6 versenkt angeordnet ist. Die Segmente 22, 23, 24, 25 weisen dabei eine Dicke auf, welche einem Mehrfachen der Dicke der Rückwand 18 entspricht. Durch die versenkte Anordnung des Plombenkopfes 8 werden Manipulationsmöglichkeiten eingeschränkt. Selbstverständlich kann von der versenkten Anordnung Abstand genommen werden, wenn die Plombe 4 für unterschiedliche Gehäusebauformen eingesetzt werden soll. Um diese Austauschbarkeit zu erlauben, ist es lediglich erforderlich, gehäuseseitige Anschlussmaße für die Plombe 4 einheitlich einzuhalten.

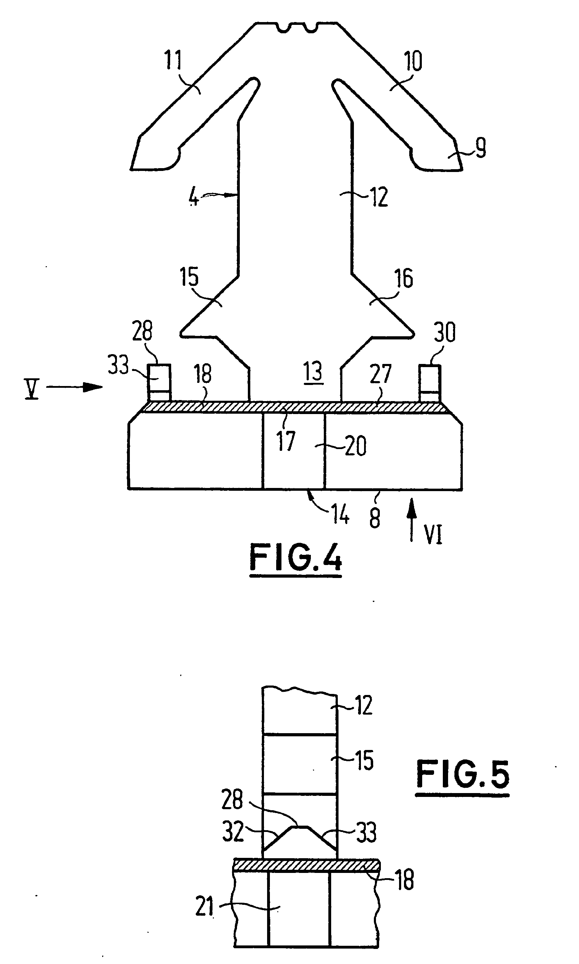

Eine andere Ausführungsform mit Getriebemitteln zum Umsetzen einer relativen Antriebsdrehbewegung der Plombe 4 in eine Abtriebsaxialverschiebung zwischen Plombe 4 und Gehäuse ist den Figuren 4 bis 6 entnehmbar. Gleiche Merkmale sind hierbei mit übereinstimmenden Bezugsziffern versehen. Demnach ist eine Rückseite 27 der Rückwand 18 mit mehreren Vorsprüngen 28, 29, 30, 31 mit rampenförmigen Flanken 32, 33 versehen. Wenn die Plombe 4 in das Gehäuse eingesetzt ist, greift jeder Vorsprung 28, 29, 30, 31 in eine zugeordnete gehäuseseitige Ausnehmung 34, 35 ein. Jede Ausnehmung 34, 35 weist eine schräge Anlagefläche für die jeweils zugeordnete Flanke 32, 33 auf. Die Anordnung der Ausnehmungen 34, 35 ist beispielhaft in Fig. 1 gestrichelt angedeutet. Die Flanken 32, 33 und Anlageflächen erstrecken sich grundsätzlich parallel zueinander. Wenn Vorsprünge 28, 29, 30, 31 und Ausnehmungen 34, 35 gewissermaßen doppelseitig ausgebildet sind, ist die Plombenanordnung drehrichtungsunabhängig wirksam. Die Wirkung der beschriebenen Merkmale ist vergleichbar einem Gewinde wie folgt.

Bei Verdrehung der Plombe 4 gleitet eine Flanke 32,33 in Abhängigkeit von der gewählten Drehrichtung auf der zugeordneten Anlagefläche wie auf einer schiefen Ebene ab. Durch den Abgleitvorgang ist die Plombe 4 bestrebt, sich in axialer Richtung aus dem Gehäuse zu entfernen. Dabei wird der Plombenkopf 8 gewissermaßen aus der Bohrungsstufe 6 gedrückt, während gleichzeitig die Rastmittel 9 gehäuseseitig angelegt werden. Meist greift unmittelbar nach der Verdrehung der Plombe 4 eine Verdrehsicherung des Schafts 12 an Nocken 15, 16 ein. Die fortgesetzte Verdrehung des Plombenkopfes 8 führt folglich zu einem kombinierten Abdrehvorgang/Zerstörungsvorgang. Mit der beschriebenen doppelseitigen Anordnung von Flanken 32, 33 und Anlageflächen ist der Effekt in jeder Drehrichtung erzielbar. Der Fig. 5 ist ein doppelseitig wirksamer Vorsprung 28 mit zwei schrägen Flanken 32, 33 entnehmbar.

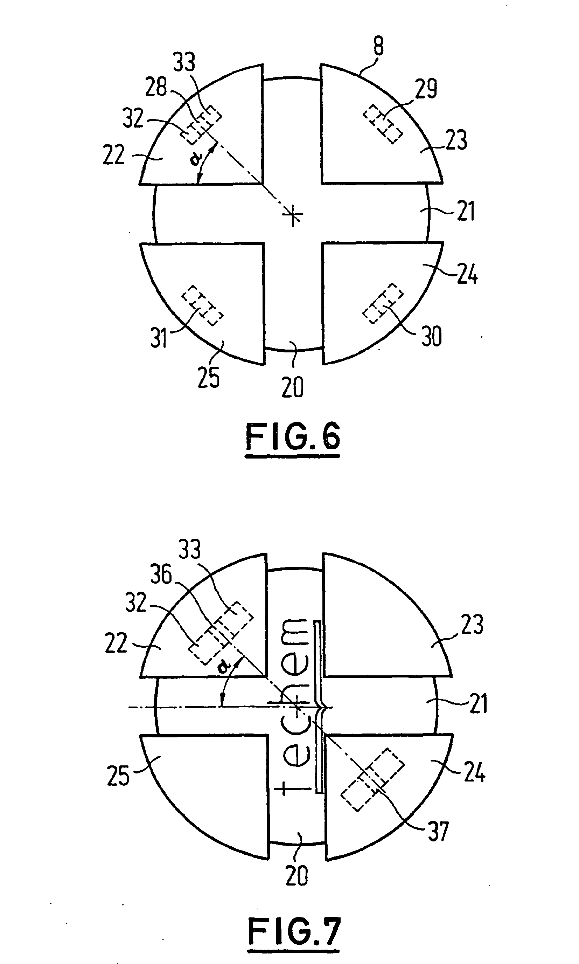

Wie der Fig. 6 entnommen werden kann, sind mehrere gestrichelt angedeutete Vorsprünge 28, 29, 30, 31 in Umfangsrichtung jeweils mittig zwischen Nuten 20, 21 vorgesehen. Mit anderen Worten sind die Vorsprünge 28, 29, 30, 31 in Umfangsrichtung jeweils um einen Winkel α von 45° versetzt zu den Nuten 20, 21 angeordnet. Schließlich verfügt jedes Segment 22, 23, 24, 25 über einen eigenen Vorsprung 28, 29, 30, 31. Durch diese Maßnahmen wird eine homogene Einleitung der zerstörenden Kräfte in den Plombenkopf 8 erzielt.

Bei einer abgewandelten Ausführungsform, welche aus Fig. 7 hervorgeht, sind wiederum übereinstimmende Merkmale mit übereinstimmenden Bezugsziffern versehen. Im Unterschied zu der vorbeschriebenen Variante sind nur zwei Vorsprünge 36, 37 vorgesehen, welche in einer axialen Projektionsrichtung in Richtung der Achse a mit den Nocken 15, 16 fluchten, und um 45° zu den Nuten 20, 21 versetzt angeordnet sind. Durch diese Anordnung greifen die Vorsprünge 36, 37 genauso wie die Nocken 15, 16 in die schlitzförmige Durchgangsöffnung 5 der Gehäuseteile ein. Durch den relativen Versatz der Vorsprünge 36, 37 zu den Nuten 20, 21 erfolgt keinerlei verstärkende Wirkung im Bereich der Bruchlinie. Für die Getriebewirkung gleiten die schrägen Flanken 32, 33 der Vorsprünge auf einer Kante der Durchgangsöffnung 5 ab. Diese Bauform weist den Vorteil auf, dass auf eine besondere Gehäuseform mit Ausnehmungen 34, 35 verzichtet werden kann. Mit anderen Worten können sogar in Benutzung befindliche Geräte nachträglich mit der verbesserten Plombe 4 mit Getriebemitteln ausgerüstet werden.

Für eine kostengünstige Herstellung der Plombe 4 empfiehlt sich die Verwendung von Kunststoffwerkstoff. Insbesondere thermoplastische Kunststoffwerkstoffe sind im Rahmen des Spritzgussverfahrens vorteilhaft verarbeitbar.

Obwohl die Erfindung am Beispiel eines gegen unbefugten Zugriff zu sichernden Heizkostenverteilers beschrieben worden ist, sind vielfältige Anwendungen oder Abwandlungen bei anderen Vorrichtungen und Gehäusesicherungen denkbar, ohne die Erfindung zu verlassen.

### Bezugszeichenliste:

- 1: Heizkostenverteiler
- 2: Gehäuseteil
- 3: Gehäuseteil
- 4: Plombe
- 5: Durchgangsöffnung
- 6: Bohrungsstufe
- 7: Bohrungsstufe
- 8: Plombenkopf
- 9: Rastmittel
- 10: Rastarm
- 11: Rastarm
- 12: Schaft
- 13: Sollbruchstelle
- 14: Ausnehmung
- 15: Nocken
- 16: Nocken
- 17: Sollbruchstelle
- 18: Rückwand
- 19: Nutgrund
- 20: Nut
- 21: Nut
- 22: Segment
- 23: Segment
- 24: Segment
- 25: Segment
- 26: Getriebemittel
- 27: Rückseite
- 28: Vorsprung
- 29: Vorsprung
- 30: Vorsprung
- 31: Vorsprung
- 32: Flanke
- 33: Flanke
- 34: Ausnehmung
- 35: Ausnehmung
- 36: Vorsprung
- 37: Vorsprung

- a: Achse

## Patentansprüche

1. Heizkostenverteiler, insbesondere zur Wärmeverbrauchserfassung von Heizkörpern, mit wenigstens zwei Gehäuseteilen (2, 3), welche mittels einer Plombe (4) aneinander befestigbar sind, und deren Befestigung aneinander durch Zerstörung der Plombe (4) gelöst werden kann, wobei die Plombe (4) einen Plombenkopf (8) und einen Schaft (12) mit wenigstens einem Rastmittel (9) zum Befestigen aufweist, **dadurch gekennzeichnet, dass** der Plombenkopf (8) wenigstens eine offene Nut (20, 21) aufweist, welche als Sollbruchstelle (17) vorgesehen ist und für die Zerstörung des Plombenkopfes (8) herangezogen wird.

2. Heizkostenverteiler nach Anspruch 1, **dadurch gekennzeichnet, dass** sich die Nut (20, 21) mit einem Nutgrund (19) bis zu einer dünnwandigen Rückwand (18) des Plombenkopfes (8) erstreckt.

3. Heizkostenverteiler nach einem der vorhergehenden Ansprüche, **dadurch gekennzeichnet, dass** die Dicke der Rückwand (18) im Bereich des Nutgrundes (19) die Dicke der Sollbruchstelle (17) definiert.

4. Heizkostenverteiler nach einem der vorhergehenden Ansprüche, **dadurch gekennzeichnet, dass** der Plombenkopf (8) symmetrisch zu einer Achse (a) ist.

5. Heizkostenverteiler nach einem der vorhergehenden Ansprüche, **dadurch gekennzeichnet, dass** die Rückwand (18) scheibenförmig ist.

6. Heizkostenverteiler nach einem der vorhergehenden Ansprüche, **dadurch gekennzeichnet, dass** die Nuten (20, 21) offene Enden aufweisen.

7. Heizkostenverteiler nach einem der vorhergehenden Ansprüche, **dadurch gekennzeichnet, dass** die Nuten (20, 21) rechtwinklig zueinander angeordnet sind.

8. Heizkostenverteiler nach einem der vorhergehenden Ansprüche, **dadurch gekennzeichnet, dass** der Plombenkopf (8) mehrere Segmente (22, 23, 24, 25) aufweist.

9. Heizkostenverteiler nach einem der vorhergehenden Ansprüche, **dadurch gekennzeichnet, dass** der Durchmesser der Segmente (22, 23, 24, 25) größer als der Durchmesser der Rückwand (18) ist, so dass jeder Nutgrund (19) radial vor dem Außendurchmesser der Segmente (22, 23, 24, 25) endet.

10. Heizkostenverteiler nach einem der vorhergehenden Ansprüche, **dadurch gekennzeichnet, dass** die Nuten (20, 21) von den Segmenten (22, 23, 24, 25) flankiert werden.

11. Heizkostenverteiler nach einem der vorhergehenden Ansprüche, **dadurch gekennzeichnet, dass** eine gerade Anzahl von Segmenten (22, 23, 24, 25) vorgesehen ist.

12. Heizkostenverteiler nach einem der vorhergehenden Ansprüche, **dadurch gekennzeichnet, dass** jedes der Segmente (22, 23, 24, 25) kreissektorförmig ist.

13. Heizkostenverteiler nach einem der vorhergehenden Ansprüche, **dadurch gekennzeichnet, dass** jedes Segment (22, 23, 24, 25) eine Dicke aufweist, welche einem Mehrfachen der Dicke der Rückwand (18) entspricht.

14. Heizkostenverteiler nach einem der vorhergehenden Ansprüche, **dadurch gekennzeichnet, dass** jede Nut (20, 21) eine Breite aufweist, welche im wesentlichen mit deren Tiefe übereinstimmt.

15. Heizkostenverteiler nach einem der vorhergehenden Ansprüche, **dadurch gekennzeichnet, dass** ein Getriebemittel (26) zum Umsetzen einer relativen Antriebsdrehbewegung zwischen Plombe (4) und Gehäuse in eine relative Abtriebsaxialverschiebung zwischen Plombe (4) und Gehäuse vorgesehen ist.

16. Heizkostenverteiler nach Anspruch 15, **dadurch gekennzeichnet, dass** das Getriebemittel (26) plombenseitig zumindest eine rampenförmige Flanke (32, 33) und gehäuseseitig zumindest eine zugeordnete, vorzugsweise schräge Anlagefläche umfasst.

17. Heizkostenverteiler nach Anspruch 15 oder 16, **dadurch gekennzeichnet, dass** ein Vorsprung (28, 29, 30, 31) mit der Flanke (32, 33) an einer Rückseite (27) der Rückwand (18) vorgesehen ist, und dass der Vorsprung (28, 29, 30, 31) in eine Ausnehmung (34, 35) in dem Gehäuseteil (2) derart einführbar und relativ zu dieser verdrehbar ist, dass die Flanke (32, 33) auf der Anlagefläche abgleitet.

18. Heizkostenverteiler nach einem der Ansprüche 15 bis 17, **dadurch gekennzeichnet, dass** jeder Vorsprung (28, 29, 30, 31) mit zwei Flanken (32, 33) versehen ist, und / oder dass jede Ausnehmung (34, 35) zwei Anlageflächen aufweist.

19. Heizkostenverteiler nach einem der Ansprüche 15 bis 18, **dadurch gekennzeichnet, dass** einer oder mehrere Vorsprünge (36, 37) vorgesehen sind, welche in Richtung der Achse (a) mit Nocken (15, 16) zur Verdrehsicherung der Plombe (4) fluchten.

20. Heizkostenverteiler nach einem der Ansprüche 15 bis 18, **dadurch gekennzeichnet, dass** jedem Segment (22, 23, 24, 25) ein Vorsprung (28, 29, 30, 31) zugeordnet ist.

21. Heizkostenverteiler nach einem der Ansprüche 15 bis 20, **dadurch gekennzeichnet, dass** jeder Vorsprung (28, 29, 30, 31; 36, 37) in Umfangsrichtung zu den Nuten (20, 21) versetzt angeordnet ist, und dass der Versatz einen Winkel α von ca. 45° einschließt.

22. Heizkostenverteiler nach einem der Ansprüche 15 bis 21, **dadurch gekennzeichnet, dass** die Plombe (4) aus Kunststoffinrerkstoff besteht.

23. Plombe zur Verbindung zweier Gehäuseteile (2, 3) eines Heizkostenverteilers (1) oder dgl., mit einem Plombenkopf (8) und einem Schaft (12) mit wenigstens einem Rastmittel (9), **dadurch gekennzeichnet, dass** der Plombenkopf (8) wenigstens eine offene Nut (20,21) aufweist, welches als Sollbruchstelle (17) vorgesehen ist und für die Zerstörung des Plombenkopfes (8) herangezogen wird.

24. Plombe nach Anspruch 23, **gekennzeichnet durch** die kennzeichnenden Merkmale eines oder mehrerer der Ansprüche 2 bis 22.

## Claims

1. A heat cost allocator, in particular for the heat consumption recording of heating devices, having at least two housing parts (2, 3) that can be connected one to the other by means of a seal (4), and their connection to each other can be disengaged by destroying the seal (4), wherein the seal (4) has a seal head (8) and a shaft (12) with at least one locking means (9) for attaching purposes, **characterised in that** the seal head (8) has at least one open groove (20, 21) that is provided as a predetermined breaking point (17) and is used for the destruction of the seal head (8).

2. The heat cost allocator as specified in claim 1, **characterised in that** the groove (20, 21) extends with a ground of the groove (19) to a thin walled rear wall (18) of the seal head (18).

3. The heat cost allocator as specified in any one of the preceding claims, **characterised in that** the thickness of the rear wall (18) in the area of the ground of the groove (19) defines the thickness of the predetermined breaking point (17).

4. The heat cost allocator as specified in any one of the preceding claims, **characterised in that** the seal head (8) is symmetrical to an axis (a).

5. The heat cost allocator as specified in any one of the preceding claims, **characterised in that** the rear wall (18) is shaped like a disc.

6. The heat cost allocator as specified in any one of the preceding claims, **characterised in that** the grooves (20, 21) have open ends.

7. The heat cost allocator as specified in any one of the preceding claims, **characterised in that** the grooves (20, 21) are arranged at right angles to one another.

8. The heat cost allocator as specified in any one of the preceding claims, **characterised in that** the seal head (8) has a plurality of segments (22, 23, 24, 25).

9. The heat cost allocator as specified in any one of the preceding claims, **characterised in that** the diameter of the segments (22, 23, 24, 25) are greater than the diameter of the rear wall (18) so that each ground of the groove (19) radially terminates prior to the external diameter of the segments (22, 23, 24, 25).

10. The heat cost allocator as specified in any one of the preceding claims, **characterised in that** the grooves (20, 21) are flanked by the segments (22, 23, 24, 25).

11. The heat cost allocator as specified in any one of the preceding claims, **characterised in that** an even number of segments (22, 23, 24, 25) are provided.

12. The heat cost allocator as specified in any one of the preceding claims, **characterised in that** each of the segments (22, 23, 24, 25) has a circular sector shape.

13. The heat cost allocator as specified in any one of the preceding claims, **characterised in that** each of the segments (22, 23, 24, 25) has a thickness that corresponds to a multiple of the thickness of the rear wall (18).

14. The heat cost allocator as specified in any one of the preceding claims, **characterised in that** each groove (20, 21) has a breadth that substantially corresponds to its depth.

15. The heat cost allocator as specified in any one of the preceding claims, **characterised in that** a gear means (26) is provided for converting a relative drive rotary motion between seal (4) and housing in a relative axial displacement between seal (4) and housing.

16. The heat cost allocator as specified in any one of the preceding claims, **characterised in that** the gear means (26) on the seal side have at least one ramp-shaped shoulder (32, 33) and on the housing side have at least one preferably inclined bearing surface that is associated therewith.

17. The heat cost allocator as specified in claim 15 or claim 16, **characterised in that** a projection (28, 29, 30, 31) is provided with the shoulder (32, 33) on a rear side (27) of the rear wall (28) and **in that** the projection (28, 29, 30, 31) can be inserted into a recess (34, 35) in the housing part (2) and is rotatable relative thereto in such a manner that the shoulder (32, 33) glides on the bearing surface.

18. The heat cost allocator as specified in any one of claims 15 to 17, **characterised in that** each projection (28, 29, 30, 31) has two shoulders (32, 33) and/or **in that** each recess (34, 35) has two bearing surfaces.

19. The heat cost allocator as specified in any one of claims 15 to 18, **characterised in that** one or a plurality of projections (36, 37) are provided that align in the direction of the axis with grooves (15, 16) to lock the seal (4) against rotation.

20. The heat cost allocator as specified in any one of claims 15 to 18, **characterised in that** each segment (22, 23, 24, 25) is associated with a projection (28, 29, 30, 31).

21. The heat cost allocator as specified in any one of claims 15 to 20, **characterised in that** each projection (28, 29, 30, 31) is arranged staggered with respect to the circumferential direction of the grooves (20, 21) and **in that** the offset comprises an angle α of approximately 45°-.

22. The heat cost allocator as specified in any one of claims 15 to 21, **characterised in that** the seal (4) is composed of plastic.

23. A seal for connection two housing parts (2, 3) of a heat cost allocator of the like, with a seal head (8) and a shaft (12) with as least one locking means (9), **characterised in that** the seal head (8) has at least one open groove (20, 21) that is provided as a predetermined breaking point and is used for the destruction of the seal head (8).

24. The seal as specified in claim 23, **characterised by** the characterising features of one or more of the claims 2 to 22.

## Revendications

1. Distributeur de frais de chauffage, notamment à des fins de détection de la consommation thermique d'éléments chauffants, comportant au moins deux parties de logement (2,3), lesquelles peuvent être fixées l'une à l'autre au moyen d'un scellé (4), et dont la fixation l'une à l'autre peut être annulée en détruisant le scellé (4), moyennant quoi le scellé (4) présente une tête de scellé (8) et une tige (12) comportant au moins un moyen d'encliquetage (9) à des fins de fixation, **caractérisé en ce que** la tête de scellé (8) présente au moins une rainure ouverte (20,21), laquelle est prévue comme zone de rupture privilégiée (17) et comme recours pour la destruction de la tête de scellé (8).

2. Distributeur de frais de chauffage selon la revendication 1, **caractérisé en ce que** la rainure (20,21) s'étend avec un fond de rainure (19) jusqu'à une paroi arrière (18) à paroi mince de la tête de scellé (8).

3. Distributeur de frais de chauffage selon une des revendications précédentes, **caractérisé en ce que** l'épaisseur de la paroi arrière (18) au niveau du fond de rainure (19) définit l'épaisseur de la zone de rupture privilégiée (17).

4. Distributeur de frais de chauffage selon une des revendications précédentes, **caractérisé en ce que** la tête de scellé (8) est symétrique à un axe (a).

5. Distributeur de frais de chauffage selon une des revendications précédentes, **caractérisé en ce que** la paroi (18) est en forme de disque.

6. Distributeur de frais de chauffage selon une des revendications précédentes, **caractérisé en ce que** les rainures (20,21) présentent des extrémités ouvertes.

7. Distributeur de frais de chauffage selon une des revendications précédentes, **caractérisé en ce que** les rainures (20,21) sont disposées à angle droit l'une par rapport à l'autre.

8. Distributeur de frais de chauffage selon une des revendications précédentes, **caractérisé en ce que** la tête de scellé (18) présente plusieurs segments (22,23,24,25).

9. Distributeur de frais de chauffage selon une des revendications précédentes, **caractérisé en ce que** le diamètre des segments (22,23,24,25) est plus grand que le diamètre de la paroi arrière (18), de telle sorte que chaque fond de rainure (19) aboutisse radialement devant le diamètre extérieur des segments (22,23,24,25).

10. Distributeur de frais de chauffage selon une des revendications précédentes, **caractérisé en ce que** les rainures (20,21) sont flanquées par les segments (22,23,24,25).

11. Distributeur de frais de chauffage selon une des revendications précédentes, **caractérisé en ce que** un nombre pair de segments (22,23,24,25) est prévu.

12. Distributeur de frais de chauffage selon une des revendications précédentes, **caractérisé en ce que** chacun des segments (22,23,24,25) est en forme de secteur de cercle.

13. Distributeur de frais de chauffage selon une des revendications précédentes, **caractérisé en ce que** chaque segment (22,23,24,25) présente une épaisseur, qui correspond à un multiple de l'épaisseur de la paroi arrière (18).

14. Distributeur de frais de chauffage selon une des revendications précédentes, **caractérisé en ce que** chaque rainure (20,21) présente une largeur, qui concorde essentiellement avec la profondeur de celle-ci.

15. Distributeur de frais de chauffage selon une des revendications précédentes, **caractérisé en ce que** un moyen de transmission (26) pour convertir un mouvement de rotation d'entraînement entre le scellé (4) et le logement en un déplacement axial de sortie entre le scellé (4) et le logement est prévu.

16. Distributeur de frais de chauffage selon la revendication 15, **caractérisé en ce que** le moyen de transmission (26) comprend du côté du scellé au moins un flanc (32,33) en forme de rampe et du côté du logement une surface d'appui coordonnée, de préférence inclinée.

17. Distributeur de frais de chauffage selon la revendication 15 ou 16, **caractérisé en ce que** une protubérance (28,29,30,31) comportant le flanc (32,33) est prévue sur un côté arrière (27) de la paroi arrière (18), et **en ce que** la protubérance (28,29,30,31) peut être insérée dans un évidement (34,35) dans la partie de logement (2) et entraînée en rotation relativement à celle-ci, de telle sorte que le flanc (32,33) glisse sur la surface d'appui.

18. Distributeur de frais de chauffage selon une des revendications 15 à 17, **caractérisé en ce que** chaque protubérance (28,29,30,31) est pourvue de deux flancs (32,33), et/ou chaque évidement (34,35) présente deux surfaces d'appui.

19. Distributeur de frais de chauffage selon une des revendications 15 à 18, **caractérisé en ce que** une ou plusieurs protubérances (36,37) sont prévues, lesquelles s'alignent dans la direction de l'axe (a) avec des cames (15,16) à des fins de blocage de rotation du scellé (4).

20. Distributeur de frais de chauffage selon une des revendications 15 à 18, **caractérisé en ce que** une protubérance (28,29,30,31) est coordonnée à chaque segment (22,23,24,25).

21. Distributeur de frais de chauffage selon une des revendications 15 à 20, **caractérisé en ce que** chaque protubérance (28,29,30,31 ;36,37) est disposée en décalage par rapport aux rainures (20,21) dans la direction circonférentielle, et **en ce que** le déport définit un angle α d'environ 45°.

22. Distributeur de frais de chauffage selon une des revendications 15 à 21, **caractérisé en ce que** le scellé (4) est constitué de matière plastique.

23. Scellé pour relier deux parties de logement (2,3) d'un distributeur de frais de chauffage (1) ou similaire, comportant une tête de scellé (8) et une tige (12) comportant au moins un moyen d'encliquetage (9),
**caractérisé en ce que** la tête de scellé (8) présente au moins une rainure ouverte (20,21), laquelle est prévue comme zone de rupture privilégiée et comme recours pour la destruction de la tête de scellé (8).

24. Scellé selon la revendication 23, **caractérisé par** les caractéristiques caractérisantes d'une ou plusieurs des revendications 2 à 22.
